# EUROPÄISCHE PATENTSCHRIFT

(11) **EP 0 694 465 B1**
(45) Veröffentlichungstag und Bekanntmachung des Hinweises auf die Patenterteilung: **24.09.1997**
(21) Anmeldenummer: 95111041.0
(22) Anmeldetag: 14.07.1995
(51) Int. Cl.: B62D 25/14, B62D 65/00, B60K 37/00, B62D 27/06

(54) **Kraftfahrzeugkarosserie mit integriertem Strukturquerträger**
Motorcarbody with a structural cross beam
Carrosserie de véhicule automobile comportant une traverse structurelle

(30) Priorität: 28.07.1994 DE 4426785
(43) Veröffentlichungstag der Anmeldung: 31.01.1996
(73) Patentinhaber: ADAM OPEL AG, 65423 Rüsselsheim (DE)
(72) Erfinder: Mildner, Udo, Dipl.-Ing. (FH), D-65550 Limburg (DE); Polster, Michael, Dipl.-Ing., D-65201 Wiesbaden (DE); Rick, Ulrich, Dipl.-Ing., D-55595 Roxheim (DE)
(74) Vertreter: Bergerin, Ralf, Dipl.-Ing.

(56) Entgegenhaltungen:
- EP-A- 0 589 299
- DE-A- 4 134 436
- DE-A- 4 337 467
- DE-C- 4 228 625
- DE-U- 9 209 769
- DE-U- 9 501 482
- DE-U-29 501 482
- US-A- 4 372 412
- US-A- 5 106 225
- PATENT ABSTRACTS OF JAPAN vol. 007 no. 173 (M-232) ,30.Juli 1983 & JP-A-58 076371 (NISSAN JIDOSHA KK) 9.Mai 1983,

## Beschreibung

Die Erfindung betrifft eine Kraftfahrzeugkarosserie mit integriertem Strukturquerträger, wobei der Strukturquerträger als zentrales Montage- und Trägerelement für das Cockpit des Fahrzeuges dient und beidseitig im Bereich der A-Säule der Karosserie mit dieser verschraubt ist, sowie in Karosserielängsrichtung orientierte Zentrierelemente zum Positionieren des Strukturquerträgers bei dessen Einbau vorgesehen sind.

Eine Kraftfahrzeugkarosserie mit integriertem Strukturquerträger der genannten Art ist aus der DE 41 34 436 A1 bekannt. Bei dieser sind der Strukturquerträger, Lenkeinrichtungen, eine Armaturentafel sowie ein Heiz- oder Klimagerät zu einer vormontierten Baueinheit zusammengefaßt. Zum Ausgleich verschiedener Toleranzen ist zwar die Armaturentafel, nicht aber das Klimagerät starr mit dem Strukturquerträger befestigt. Weiterhin sind verschiedene, jeweils einen Zentrierdorn und eine Aufnahme für diesen enthaltene Zentriereinrichtungen für das Klimagerät, die Armaturentafel und den Strukturquerträger derart unterschiedlicher Ausbildung und Dimensionierung vorhanden, daß sie teils eine Ausrichtung des Klimagerätes nur in Quer- und Höhenrichtung, teils eine Ausrichtung der Armaturentafel und damit des Strukturquerträgers nur in Querrichtung und teils einer Ausrichtung des Strukturquerträgers und der mit ihm starr verbundenen Bestandteile nur in Höhenrichtung sicherstellen.

Bei der Kraftfahrzeugkarosserie mit integriertem Strukturträger gemäß der DE 41 34 436 A1 erfolgt das Verschrauben des Strukturträgers mit den A-Säulen mittels in Karosserielängsrichtung positionierten Schrauben, die in Querrichtung der Karosserie verlaufende Langlöcher auf beiden Seiten des Strukturquerträgers durchsetzen und in Gewindebohrungen in den Stirnseiten der A-Säulen eingeschraubt sind.

Aus der DE 33 30 140 A1 ist eine vormontierte Baueinheit für den Cockpit-Bereich von Kraftfahrzeugen bekannt, bei der ein Strukturquerträger beidendig im Bereich der A-Säule der Karosserie mit dieser verschraubt wird, wobei die Schrauben in Längsrichtung des Querträgers positioniert und in stirnseitige Platten des Querträgers eingeschraubt sind.

Es ist Aufgabe der vorliegenden Erfindung, eine Kraftfahrzeugkarosserie mit integriertem Strukturquerträger der eingangs genannten Art so weiter zu bilden, daß eine einfache Montage und Befestigung des Strukturquerträgers mit den zugeordneten Wandungsabschnitten der Karosserie möglich ist.

Gelöst wird die Aufgabe dadurch, daß zwei bolzenförmige Zentrierelemente vorgesehen sind, wobei die Zentrierelemente mit dem Strukturquerträger im Bereich dessen beider Enden verbunden sind, sowie der Strukturquerträger beidendig in Längsrichtung der Karosserie orientierte Stirnplatten aufweist und jede Stirnplatte mehrere Bohrungen zur Aufnahme von mit der Karosserie verbundenen Schrauben aufweist.

Erfindungsgemäß erfolgt damit die Zentrierung des Strukturquerträgers ausschließlich mit den beiden bolzenförmigen Zentrierelementen. Aufgrund des Umstandes, daß die Zentrierelemente im Bereich der Enden des Strukturquerträgers angeordnet sind, ist eine genaue Positionierung des Strukturquerträgers relativ zu den beiden A-Säulen der Karosserie möglich mit der Konsequenz, daß die vom Strukturquerträger getragenen Bauteile des Cockpites gleichfalls exakt zur Karosserie ausgerichtet sind. Die Lagerung der Zentrierelemente in der Karosserie erfolgt spielfrei, das heißt, es ist bei in die Kraftfahrzeugkarosserie eingeschobenem Strukturquerträger dieser - auf die radiale Erstreckung der Zentrierelemente bezogen - spielfrei zur Kraftfahrzeugkarosserie gelagert. In dieser Position wird der Strukturquerträger mit der Karosserie verschraubt und zwar mit den Schrauben, bezogenen auf deren Längsrichtung, senkrecht zur Längserstreckung der Zentrierelemente orientiert.

Erfindungsgemäß erfolgt damit sowohl die Positionierung als auch die Befestigung des Strukturquerträgers im Bereich dessen beider Enden mit der Karosserie, womit wegen der großen Positionierungs- und Befestigungsabstände eine exakte Ausrichtung des Strukturquerträgers zur Karosserie sichergestellt ist und im übrigen die Schraubpunkte gut zugängig sind.

Gemäß einer besonderen Gestaltung ist vorgesehen, daß das jeweilige Zentrierelement im Bereich seines freien Endes kegelförmig ausgebildet ist. Das Einführende des bolzenförmigen Zentrierelementes ist damit spitz ausgebildet, mit der Konsequenz, daß beim Einführen des Zentrierelementes in ein Loch in der Karosserie sich der zunächst ungenau positionierte Strukturquerträger über die Kegelfläche ausrichtet und beim vollständigen Einschieben des jeweiligen Zentrierelementes dieses sich über seinen Zylinderabschnitt paßgenau in die Karosseriebohrung einfügt.

Gemäß einer besonderen Ausführungsform der vorliegenden Erfindung ist vorgesehen, daß die jeweilige Schraube zum Verbinden des Strukturträgers mit der Karosserie ein Distanzelement zwischen der zugeordneten Karosseriewandung und der Stirnplatte des Strukturquerträgers durchsetzt. Das Distanzelement ermöglicht eine seitliche spielfreie Verschraubung des Strukturquerträgers mit der Karosseriewandung. Vorteilhaft sollte das Distanzelement in Schraubenlängsrichtung verstellbar sein, womit es nicht erforderlich ist, unterschiedlich starke Distanzelemente vorzuhalten, sondern dieses der jeweils vorgegebenen Distanz anzupassen.

Der Distanzausgleich gestattet es, insbesondere den Strukturquerträger kostengünstig herzustellen, indem die seitlichen Enden des Rohträgers geschnitten werden und dieser seitlich geschlossen wird. Hierzu werden Stirnplatten mit senkrecht zu diesen angeordneten Flanschen in den Lenkungsquerträger eingesteckt und durch Punktschweißen mit diesem verbunden. Hieraus resultiert ein nicht exakt zu definierender Abstand zwischen der Stirnplatte des Lenkungsquerträgers und der Karosseriewandung, der durchaus größer als 20 mm sein kann. Um diese recht große Distanz überbrücken zu können, sieht eine besondere Gestaltung vor, daß das Distanzelement in Schraubenlängsrichtung längenveränderlich verstellbar ist und zwei ineinander geschraubte Distanzhülsen aufweist. Es ist dabei unerheblich, ob die das Distanzelement durchsetzende Schraube mit der Stirnplatte des Strukturquerträgers oder mit der Karosseriewandung bzw. einer mit der Karosseriewandung befestigten Mutter verschraubt ist. In aller Regel wird jedoch davon auszugehen sein, daß die Schraube mit dem Strukturquerträger verschweißt ist, da ein der Karosseriewandung zugewandter Schraubenkopf besser zugänglich ist. Gemäß einer anderen, gleichfalls vorteilhaften Variante ist die das Distanzelement durchsetzende Schraube in eine Gewindebohrung des mit der Stirnplatte des Strukturquerträgers oder mit der Karosseriewandung befestigten Distanzelementes eingeschraubt. Zweckmäßig ist die Mutter bzw. das Distanzelement mit der Stirnplatte des Strukturquerträgers verschweißt.

Das Ausfahren des Distanzelementes auf den vorgegebenen Abstand zwischen Karosseriewandung und Stirnplatte des Strukturquerträgers kann auf unterschiedliche Art und Weise erfolgen. Eine Gestaltung sieht beispielsweise vor, die drehbare Distanzhülse mit einem mehreckigen Querschnitt, insbesondere einem quadratischen oder regelmäßig sechseckigen Querschnitt auszubilden. Mittels eines Verstellwerkzeuges, insbesondere eines Schraubenschlüssels wird die drehbare Distanzhülse verdreht und das Distanzelement auf die gewünschte Distanz gelängt. Eine weitere Variante, die ein besonders einfaches Längen des Distanzelementes ermöglicht sieht vor, daß beide Distanzhülsen mit einem Gewinde zur Aufnahme der Schraube versehen sind, wobei die Schraube einen kopffernen Gewindeabschnitt aufweist, der drehmomentübertragend in die schraubenkopfnahe Distanzhülse einschraubbar ist. Die Drehmomentübertragung kann beispielsweise dadurch erfolgen, daß die Schraube im genannten Bereich mit einer klemmenden Beschichtung versehen ist, mit der ein Drehmoment auf die drehbare, dem Schraubenkopf zugewandte Distanzhülse übertragen werden kann, womit sich diese Distanzhülse aus der anderen, feststehenden Distanzhülse herausdreht und an die Karosseriewandung anlegt. Nach Aufbringen eines höheren Drehmomentes dreht sich der kopfferne Gewindeabschnitt der Schraube durch die schraubenkopfnahe Distanzhülse in den Gewindeabschnitt der anderen Distanzhülse und stellt damit die feste Verbindung zur Karosseriewandung dar.

Für den Fall, daß das Distanzelement kein Gewinde zur Aufnahme der Schraube aufweist, sondern die Schraube in einer mit der Karosseriewandung verbundenen Mutter gehalten ist, wird vorgeschlagen, daß das Distanzelement mit einem Außenring verbunden ist, der mit Klipshaken versehen ist, die durch Löcher in der Karosseriewandung steckbar sind. Diese Ausgestaltung ermöglicht ein einfaches Montieren bzw. verliersicheres Fixieren des Distanzelementes an der Karosseriewandung. Besonders einfach läßt sich das Distanzelement fertigen, wenn die mit dieser zusammenwirkende Distanzhülse aus Metall und der Außenring mit Klipshaken aus Kunststoff besteht und dabei ein Bauteil bilden. Hierzu wird im Kunststoffspritzverfahren die metallische Distanzhülse von dem Kunststoffaußenring mit Klipshaken umgeben.

Die Verschraubung des Strukturquerträgers mit der Karosserie kann gemäß einer anderen Ausführungsform in etwa Längsrichtung des Kraftfahrzeuges erfolgen, wenn die Stirnplatten winklig mit diesen verbundene Befestigungsflansche aufweisen, an denen Bohrungen für die Schrauben zum Verbinden mit der Karosserie vorgesehen sind. Die Befestigungsflansche können beispielsweise derart in Querrichtung des Fahrzeuges orientiert sein, daß die Achsen der Bohrungen parallel zu den Achsen der Zentrierelemente des Strukturträgers verlaufen. Bei dieser Befestigung des Strukturquerträgers können die in Querrichtung der Karosserie auftretenden Toleranzen mittels am Befestigungsflansch oder an der Karosserie vorgesehenen Langlöchern ausgeglichen werden, während Toleranzen in Längsrichtung des Fahrzeuges beispielsweise durch die zuvor beschriebenen längenverstellbaren Distanzelemente ausgeglichen werden können.

Eine weitere Versteifung des Strukturquerträgers und Reduzierung der im Fahrbetrieb entstehenden und auf die Lenksäule übertragenden Schwingungen kann dadurch erreicht werden, daß der Strukturquerträger in seinem etwa mittleren Bereich zusätzlich mittels eines auf Druck und/oder Zug beanspruchbaren Stützelementes mit der Karosserie, vorzugsweise mit einem Längstunnel, verbunden ist. Dabei kann das Stützelement zum Ausgleich der Montagetoleranzen zumindest am Strukturquerträger elastisch und schwenkbar gelagert sein. Für diese elastische und schwenkbare Lagerung des Stützelementes können an sich bekannte elastische Buchsen oder andere für eine derartige Entkoppelung geeignete Mittel verwendet werden.

Weitere Merkmale der Erfindung sind in der Beschreibung der Figuren und in den Figuren selbst dargestellt, wobei bemerkt wird, daß alle Merkmale sowie Kombinationen von Merkmalen erfindungswesentlich sind.

In den Figuren ist die Erfindung anhand zweier Ausführungsformen dargestellt, ohne auf diese beschränkt zu sein. Es stellt dar:
- Figur 1: eine räumliche Ansicht des Vorderbaus einer Karosserie eines Personenkraftwagens, sowie des Strukturquerträgers, vor dessen Montage mit der Karosserie und ohne das mit ihm verbundene Cockpit gezeigt,
- Figur 2: eine räumliche Ansicht des Strukturquerträgers ohne das mit diesem verbundene Cockpit des Fahrzeuges,
- Figur 3: einen Schnitt durch eine erste Ausführungsform einer Verbindung von Strukturquerträger und Karosserie, verdeutlicht für ein Ende des Strukturquerträgers, in Längsrichtung des Strukturquerträgers geschnitten,
- Figur 4: einen Schnitt durch eine zweite Ausführungsform einer Verbindung von Strukturquerträger und Karosserie, verdeutlicht für ein nur teilweise dargestelltes Ende des Strukturquerträgers, in Längsrichtung des Strukturquerträgers geschnitten,
- Figur 5: eine Detaildarstellung des in der Figur 4 gezeigten Distanzelementes zum Verbinden von Strukturquerträger und Karosserie, in einer geschnittenen Einzelteildarstellung,
- Figuren 6a, 6b und 6c: den Einschraubvorgang zum Erzeugen der Verbindung bei der Ausführungsform nach den Figuren 4 und 5 und die
- Figur 7: eine räumliche Ansicht eines an einen Längstunnel abgestützten StrukturquerträgerS mit einer alternativen Ausbildung der Stirnplatten.

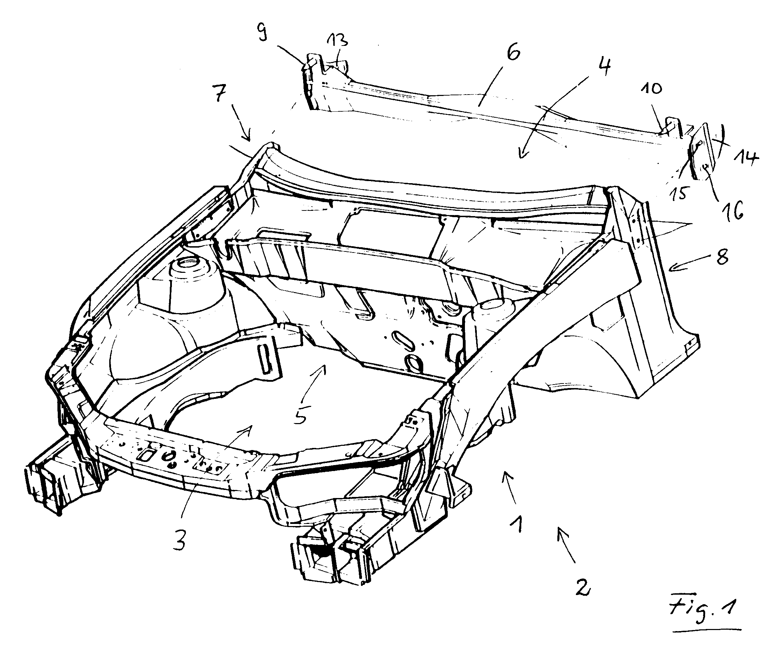

Figur 1 zeigt den Vorderbau 1 der Karosserie 2. Im Bereich der den Motorraum 3 zur Fahrgastzelle 4 hin abtrennenden Stirnwand 5 der Karosserie 2 ist der Strukturquerträger 6 im Bereich der beiden A-Säulen 7 und 8 mit der Karosserie 2 verbindbar.

Vor dem Einfahren des Strukturquerträgers 6 in die Karosserie wird dieser mit dem aus Gründen zeichnerischer Klarheit nicht gezeigten Cockpit bestückt, das Lenkeinrichtungen, eine Armaturentafel sowie ein Heiz- oder Klimagerät umfaßt.

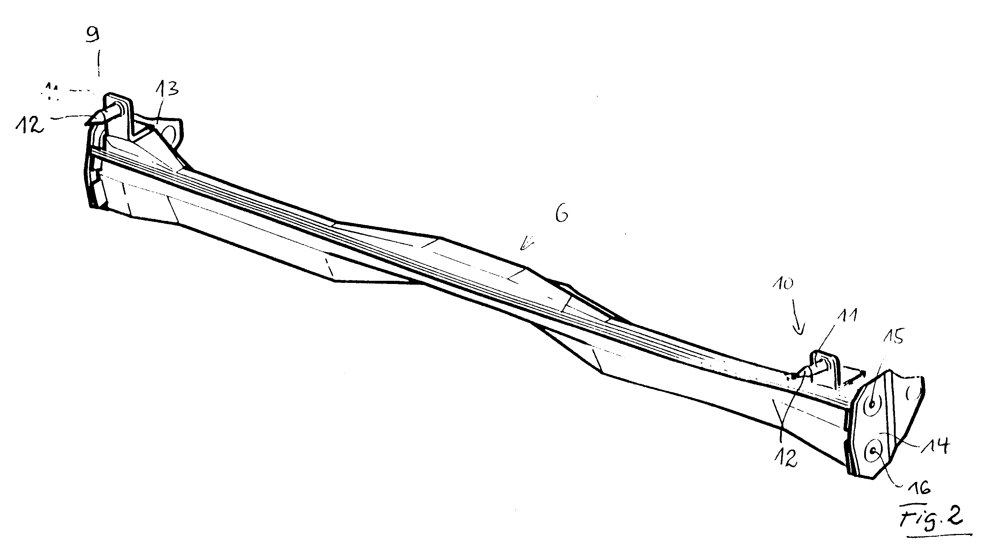

Wie der Darstellung der Figuren 1 und 2 zu entnehmen ist, weist der Strukturquerträger 6 im Bereich seiner beiden Enden in Längsrichtung der Karosserie 2 orientierte und auf den Vorderbau 1 hin gerichtete bolzenförmige Zentrierelemente 9 und 10 auf. Das jeweilige Zentrierelement 9 bzw. 10 weist einen hinteren zylindrischen Abschnitt 11 sowie einen vorderen kegelförmigen Abschnitt 12 auf. Die beiden stirnseitigen Enden des Strukturquerträgers 6 sind beschnitten und ohne jede Flanschabstellung ausgeführt. Im Bereich jedes Endes ist der Strukturquerträger 6 mit in Längsrichtung der Karosserie 2 orientierten Stirnplatten 13 und 14 versehen, an denen senkrechte Flansche abgestellt sind, die in das jeweilige Ende des Lenkungsquerträgers 6 eingesteckt und mit diesem durch Punktschweißen verbunden sind. Jede Stirnplatte 13 bzw. 14 weist zwei Bohrungen 15 und 16 zum Verbinden des Strukturquerträgers 6 mit der Karosserie 2 mittels Schrauben auf.

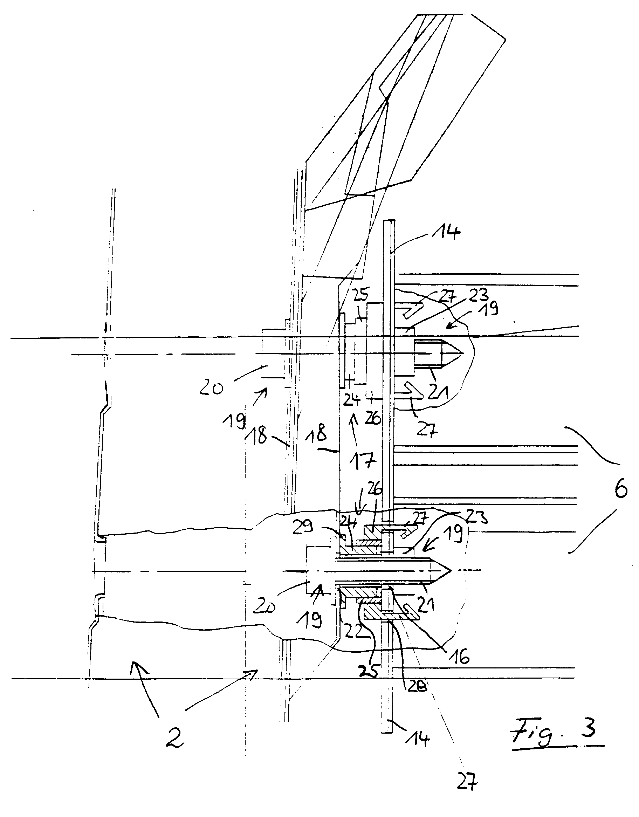

Die Schnittdarstellung gemäß Figur 3 verdeutlicht für die erste Verbindungsvariante die Verbindung des Strukturquerträgers 6 mit der Karosserie 2, konkret der Karosseriewandung 18 mittels zweier Schrauben 19, die Distanzelemente 17 durchsetzen. Aufgrund einer vorgegebenen Profilierung der Karosseriewandung 18 kommen bei der gezeigten Ausführungsform zwei Schrauben unterschiedlicher Länge zur Anwendung. Jede Schraube 19 ist mit einem zylindrischen Schraubenkopf 20 mit Innensechskant versehen. Die jeweilige Schraube 19 ist mit ihrem Gewindeabschnitt 21 von außen durch eine Bohrung 22 in der Karosseriewandung 18 gesteckt und durchsetzt das zwischen Karosseriewandung 18 und Stirnplatte 14 des Strukturquerträgers 6 befindliche Distanzelement 17. Das freie Ende des Gewindeschaftes durchsetzt die Bohrung 15 bzw. 16 in der Stirnplatte 13 bzw. 14 und ist in eine Mutter 23 eingeschraubt, die auf der Innenseite der Stirnplatte 13 bzw. 14 mit dieser verschweißt ist.

Das Distanzelement 17 ist in Schraubenlängsrichtung längenveränderlich verstellbar. Hierzu weist es eine innere Distanzhülse 24 mit Außengewinde und eine äußere Distanzhülse 25 mit Innengewinde auf, die damit ineinanderschraubbar sind, wobei die Distanzhülsen aus Metall bestehen. Die äußere Distanzhülse 25 ist mit einem Außenring 26 mit mehreren Klipshaken 27 verbunden. Außenring 26 und Klipshaken 27 bestehen aus Kunststoff und bilden mit der Distanzhülse 25 ein Bauteil, das durch Kunststoffspritzen hergestellt wird. Die Klipshaken sind in Löcher 28 in der Stirnplatte 13 bzw. 14 eingesteckt.

Zum Montieren des Strukturquerträgers 6 werden bei vollständig eingeschraubter Distanzhülse 24 die Distanzelemente 17 mit den Klipshaken 24 in die Stirnplatte 13 bzw. 14 eingesteckt. Es wird dann der Strukturquerträger 6 in seine Position zu der dem jeweiligen Ende des Strukturquerträgers 6 zugeordneten Karosseriewandung 18 eingefahren und die jeweilige Schraube 19 durch die Bohrung 22 in der Karosseriewandung 18 und durch das Distanzelement 17 sowie die Bohrung 15 bzw. 16 in der Stirnplatte 13 bzw. 14 in die Mutter 23 geringfügig eingeschraubt. Anschließend wird die Distanzhülse 24 aus der Distanzhülse 25 herausgedreht, beispielsweise mittels eines Schraubenschlüssels, der mit der entsprechend gestalteten Außenkontur der Distanzhülse 24 benachbart deren Gewindeabschnittes zusammenwirkt. Die Distanzhülse 24 wird so weit aus der Distanzhülse 25 herausgedreht, bis der Flanschabschnitt 29 an der Karosseriewandung 18 anliegt und damit das Distanzelement 17, konkret die ausgefahrenen Distanzhülsen 24 und 25, die Distanz zwischen der Stirnplatte 13 bzw. 14 des Strukturquerträgers 4 und der Karosseriewandung 18 überbrückt. Anschließend wird die jeweilige Schraube 19 weiter in die Mutter 23 eingeschraubt, so daß die Karosseriewandung 18 und die Stirnplatte 13 bzw. 14 des Strukturquerträgers 6 zwischen dem Schraubenkopf 20, dem Distanzelement 17 und der Mutter 23 verspannt sind.

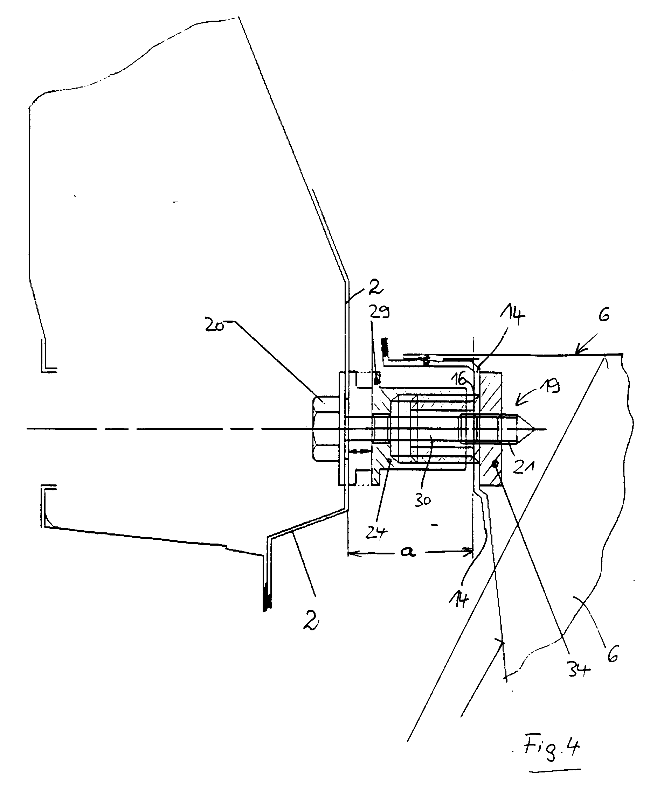

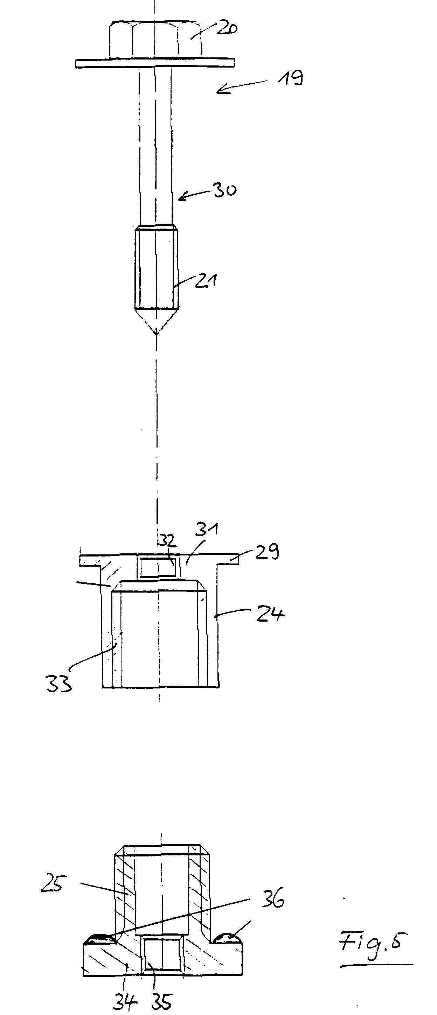

Bei der in den Figuren 4 und 5 gezeigten zweiten Ausführungsform einer Verbindung von Karosserie 2 und Strukturquerträger 6 sind mit der Ausführungsform nach den Figuren 1 bis 3 übereinstimmende Teile der Einfachheit halber mit denselben Bezugsziffern bezeichnet. Bei der zweiten Variante weist das Distanzelement 24 allerdings ein Innengewinde und das Distanzelement 25 ein Außengewinde auf und es ist nur der freie Endabschnitt des Schaftes 30 der Schraube 19 mit einem Gewinde 21 versehen, wobei der Gewindedurchmesser größer ist als der verbleibende Schaftdurchmesser. Die Distanzhülse 24 ist im Bereich ihres Flanschabschnittes 29 mit einem Deckelelement 31 versehen, das eine rotationssymmetrisch zum Innengewinde 33 der Distanzhülse 24 angeordnete Gewindebohrung 32 aufweist. Der Durchmesser der Gewindebohrung 32 entspricht dem Durchmesser des Gewindeabschnittes 21 der Schraube 19. Im vorbeschriebenen Sinne ist auch die Distanzhülse 25 mit einem dem Strukturquerträger 6 zugewandten Deckelelement 34 mit Flansch versehen, wobei auch das Deckelelement 34 mit einer zentralen Gewindebohrung 35 versehen ist, deren Gewindedurchmesser dem des Gewindeabschnittes 21 entspricht, allerdings geringer ist als der Innendurchmesser des verbleibenden Bereiches der Distanzhülse 25.

Bei der Ausführungsform nach den Figuren 4, 5 besteht die Besonderheit darin, daß ein automatisches Verschrauben von Karosseriewandung 18 und Strukturquerträger 6 bei relativ großem Abstand dieser Bauteile, womit ein Maß a von durchaus mehr als 20 mm gemeint ist, möglich ist. Dies beruht im wesentlichen darauf, daß die Schraube 19 in die Hülse 24 drehmomentübertragend einschraubbar ist, beispielsweise indem der Gewindeabschnitt 21 mit einer klemmenden Beschichtung versehen ist.

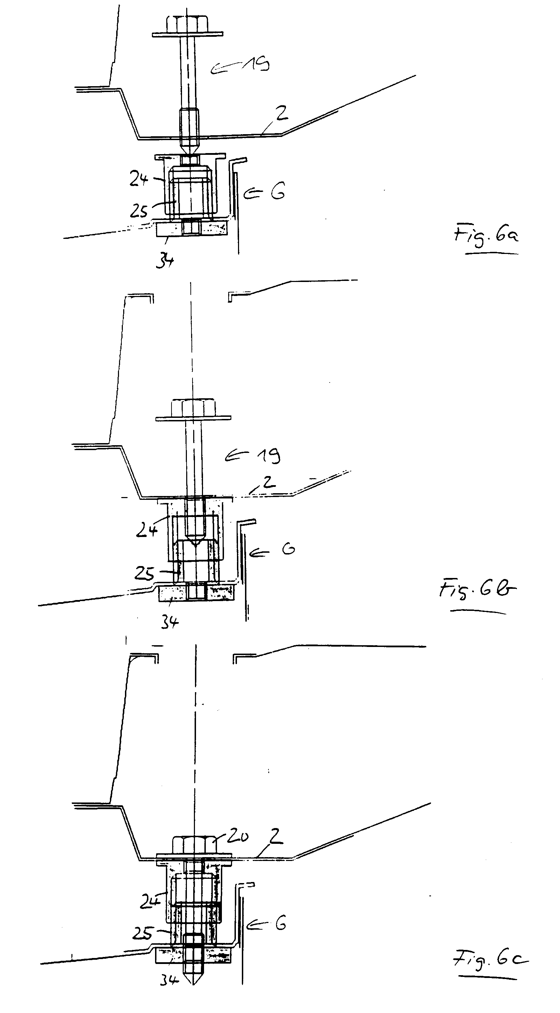

Der Einschraubvorgang ist in den Figuren 6a bis 6c verdeutlicht: Zunächst wird die durch die Bohrung 15 bzw. 16 gesteckte Distanzhülse 25 im Schweißzusammenbau des Strukturquerträgers 6 an die Stirnplatte 14 bzw. 13 des Strukturquerträgers 6 angeschweißt, was in Figur 5 durch die Schweißpunkte 36 verdeutlicht ist. Die Distanzhülse 24 wird im Cockpitaufbau lose auf die Distanzhülse 25, das heißt, ohne Drehmoment aufgeschraubt (Figur 6a). Nach Einfahren des Cockpits ins Fahrzeug wird die seitliche Verschraubung des Strukturquerträgers 6 vorgenommen. Bedingt durch die klemmende Beschichtung der Schraube 19, mit der ein Drehmoment von beispielsweise 5 Nm übertragen werden kann, dreht sich die Hülse 24 an die Karosseriewandung (Figur 6b). Nach Aufbringen eines höheren Drehmomentes als 5 Nm dreht sich die Schraube weiter und stellt die Verbindung zur Distanzhülse 25 her (Figur 6c).

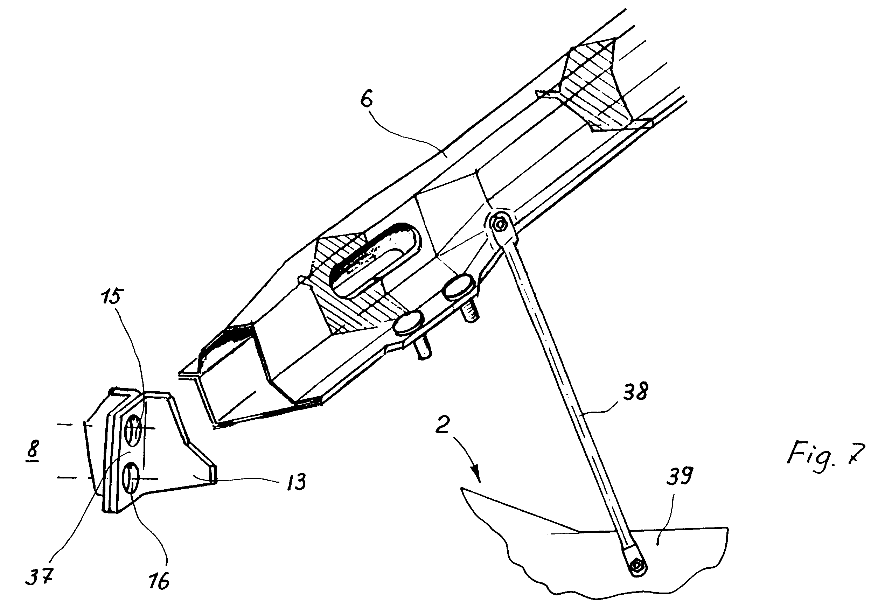

Die Figur 7 zeigt einen Strukturquerträger 6 mit einer alternativen Ausbildung der Stirnplatten 13, welche jeweils einen winklig mit diesen verbundenen Befestigungsflansch 37 aufweisen. Im etwa in einer vertikalen Ebene in Querrichtung der Karosserie orientierten Befestigungsflansch 37 sind Bohrungen 15, 16 zur Befestigung des Strukturquerträgers 6 im Bereich der A-Säulen 7, 8 vorgesehen. Die Bohrungen 15, 16 sind dabei zum Ausgleich der in Längsrichtung des Strukturquerträgers 6 auftretenden Toleranzen auf mindestens einer Seite des Strukturquerträgers 6 als Langlöcher (nicht dargestellt) ausgebildet. Der Befestigungsflansch 37 kann einstückig mit der Stirnplatte 13 oder, wie in Figur 7 gezeigt, durch zwei rechtwinklige Umbiegungen an der aus zwei Winkelelementen bestehenden Stirnplatte gebildet werden.

Im mittleren Bereich ist der Strukturquerträger 6 zusätzlich mittels eines Stützelementes 38 an einem Längstunnel 39 abgestützt. Das Stützelement 38 ist zum Ausgleich der Fertigungs- und Montagetoleranzen am Strukturquerträger 6 elastisch und schwenkbar gelagert. Dazu ist zwischen dem Stützelement 38 und dem Strukturquerträger 6 eine elastische Gummibuchse (nicht dargestellt) mit einem Distanzelement angeordnet. Die Befestigung des Stützelementes 38 am Längstunnel 39 kann in ähnlicher Weise entkoppelt erfolgen. Das Stützelement 38 kann auch mittels Schraubmittel fest mit dem Längstunnel 39 verbunden werden. Bei dieser festen Verbindung kann zum besseren Ausgleich der in Längsrichtung des Stützelementes 38 auftretenden Toleranzen am Stützelement 38 oder am Längstunnel 39 ein Langloch (nicht dargestellt) vorgesehen sein.

## Patentansprüche

1. Kraftfahrzeugkarosserie mit integriertem Strukturquerträger (6), wobei der Strukturquerträger als zentrales Montage- und Trägerelement für das Cockpit des Fahrzeuges dient und beidseitig im Bereich der A-Säule (7, 8) der Karosserie mit dieser verschraubt ist, sowie in Karosserielängsrichtung orientierte Zentrierelemente (9, 10) zum Positionieren des Strukturquerträgers bei dessen Einbau vorgesehen sind, **dadurch gekennzeichnet**, daß zwei bolzenförmige Zentrierelemente (9, 10) vorgesehen sind, wobei die Zentrierelemente (9, 10) mit dem Strukturquerträger (6) im Bereich dessen beiden Enden verbunden sind, sowie der Strukturquerträger (6) beidendig in Längsrichtung der Karosserie (2) orientierte Stirnplatten (13, 14) aufweist und jede Stirnplatte (13, 14) mehrere Bohrungen (15, 16) zur Aufnahme von mit der Karosserie (2) verbundenen Schrauben (19) aufweist.

2. Kraftfahrzeugkarosserie nach Anspruch 1, **dadurch gekennzeichnet**, daß das jeweilige Zentrierelement (9, 10) im Bereich seines freien Endes kegelförmig ausgebildet ist.

3. Kraftfahrzeugkarosserie nach Anspruch 1 oder 2, **dadurch gekennzeichnet**, daß die jeweilige Schraube (19) ein Distanzelement (17) zwischen der zugeordneten Karosseriewandung (18) und der Stirnplatte (13, 14) des Strukturquerträgers (6) durchsetzt.

4. Kraftfahrzeugkarosserie nach Anspruch 3, **dadurch gekennzeichnet**, daß das Distanzelement (17) in Schraubenlängsrichtung längenveränderlich verstellbar ist.

5. Kraftfahrzeugkarosserie nach Anspruch 4, **dadurch gekennzeichnet**, daß das Distanzelement (17) zwei ineinander geschraubte Distanzhülsen (24, 25) aufweist.

6. Kraftfahrzeugkarosserie nach einem der Ansprüche 3 bis 5, **dadurch gekennzeichnet**, daß die das Distanzelement (17) durchsetzende Schrauben (19) in eine an der Stirnplatte (13, 14) des Strukturquerträgers (6) oder mit der Karosseriewandung (18) befestigte Mutter (23) eingeschraubt ist.

7. Kraftfahrzeugkarosserie nach einem der Ansprüche 3 bis 5, **dadurch gekennzeichnet**, daß die das Distanzelement (17) durchsetzende Schraube (19) in eine Gewindebohrung (35) des mit der Stirnplatte (13, 14) des Strukturquerträgers (6) oder mit der Karosseriewandung (18) befestigten Distanzelementes (17) eingeschraubt ist.

8. Kraftfahrzeugkarosserie nach Anspruch 6 oder 7, **dadurch gekennzeichnet**, daß die Mutter (23) bzw. das Distanzelement (17) mit der Stirnplatte (13, 14) des Strukturquerträgers (6) verschweißt ist.

9. Kraftfahrzeugkarosserie nach einem der Ansprüche 5 bis 8, **dadurch gekennzeichnet**, daß die drehbare Distanzhülse (24) einen mehreckigen Querschnitt, insbesondere einen quadratischen oder regelmäßig sechseckigen Querschnitt aufweist.

10. Kraftfahrzeugkarosserie nach einem der Ansprüche 5 bis 9, **dadurch gekennzeichnet**, daß die dem Schraubenkopf (20) abgewandte Distanzhülse (25) mit einem Außenring (26) mit Klipshaken (27) verbunden ist, wobei die Klipshaken (27) durch Löcher (28) in der Stirnplatte (13, 14) einsteckbar sind.

11. Kraftfahrzeugkarosserie nach Anspruch 10, **dadurch gekennzeichnet**, daß die dem Schraubenkopf (20) abgewandte Distanzhülse (25) aus Metall und der Außenring (26) mit Klipshaken (27) aus Kunststoff bestehen.

12. Kraftfahrzeugkarosserie nach einem der Ansprüche 3 bis 8, **dadurch gekennzeichnet**, daß beide Distanzhülsen (24, 25) mit einem Gewinde (32, 35) zur Aufnahme der Schraube (19) versehen sind, wobei die Schraube (19) einen kopffernen Gewindeabschnitt (21) aufweist, der drehmomentübertragend in die schraubenkopfnahe Distanzhülse (24) einschraubbar ist.

13. Kraftfahrzeugkarosserie nach Anspruch 12, **dadurch gekennzeichnet**, daß der kopfferne Gewindeabschnitt (21) der Schraube (19) mit einer klemmenden Beschichtung versehen ist.

14. Kraftfahrzeugkarosserie nach einem der Ansprüche 1 bis 13, **dadurch gekennzeichnet**, daß mindestens eine der Stirnplatten (13) einen winklig mit dieser verbundenen Befestigungsflansch (37) aufweist, an dem die Bohrungen (15, 16) vorgesehen sind.

15. Kraftfahrzeugkarosserie nach Anspruch 14, **dadurch gekennzeichnet**, daß der Befestigungsflansch (37) in etwa Querrichtung der Karosserie (2) orientiert ist.

16. Kraftfahrzeugkarosserie nach einem der Ansprüche 1 bis 15, **dadurch gekennzeichnet**, daß der Strukturquerträger (6) in seinem etwa mittleren Bereich zusätzlich mittels eines auf Druck und/oder Zug beanspruchbaren Stützelementes (38) mit der Karosserie (2), vorzugsweise mit einem Längstunnel (39), verbunden ist.

17. Kraftfahrzeugkarosserie nach Anspruch 16, **dadurch gekennzeichnet**, daß das Stützelement (38) zumindest am Strukturquerträger (6) elastisch und schwenkbar gelagert ist.

## Claims

1. Motor vehicle body with integrated structural crossbeam (6), wherein the structural crossbeam serves as a central assembly and carrier element for the cockpit of the vehicle and on both sides in the region of the front pillar (7, 8) of the body is bolted to the latter, and also centring elements (9, 10) oriented in the longitudinal direction of the body are provided for positioning the structural crossbeam during installation thereof, characterised in that two pin-like centring elements (9, 10) are provided, wherein the centring elements (9, 10) are connected to the structural crossbeam (6) in the region of both its ends, and also the structural crossbeam (6) at both ends comprises end plates (13, 14) oriented in the longitudinal direction of the body (2) and each end plate (13, 14) comprises several bores (15, 16) for receiving bolts (19) connected to the body (2).

2. Motor vehicle body according to claim 1, characterised in that the respective centring element (9, 10) is conical in the region of its free end.

3. Motor vehicle body according to claim 1 or 2, characterised in that the respective bolt (19) passes through a distance element (17) between the associated body panel (18) and the end plate (13, 14) of the structural crossbeam (6).

4. Motor vehicle body according to claim 3, characterised in that the distance element (17) is adjustable in length in the longitudinal direction of the bolt.

5. Motor vehicle body according to claim 4, characterised in that the distance element (17) comprises two distance sleeves (24, 25) screwed one inside the other.

6. Motor vehicle body according to any of claims 3 to 5, characterised in that the bolt (19) passing through the distance element (17) is screwed into a nut (23) fixed to the end plate (13, 14) of the structural crossbeam (6) or to the body panel (18).

7. Motor vehicle body according to any of claims 3 to 5, characterised in that the bolt (19) passing through the distance element (17) is screwed into a threaded bore (35) of the distance element (17) fixed to the end plate (13, 14) of the structural crossbeam (6) or to the body panel (18).

8. Motor vehicle body according to claim 6 or 7, characterised in that the nut (23) or the distance element (17) is welded to the end plate (13, 14) of the structural crossbeam (6).

9. Motor vehicle body according to any of claims 5 to 8, characterised in that the rotatable distance sleeve (24) has a polygonal cross-section, in particular a square or regular hexagonal cross-section.

10. Motor vehicle body according to any of claims 5 to 9, characterised in that the distance sleeve (25) facing away from the bolt head (20) is connected to an outer ring (26) with clip hooks (27), wherein the clip hooks (27) can be inserted through holes (28) in the end plate (13, 14).

11. Motor vehicle body according to claim 10, characterised in that the distance sleeve (25) facing away from the bolt head (20) is made of metal and the outer ring (26) with clip hooks (27) are made of plastic.

12. Motor vehicle body according to any of claims 3 to 8, characterised in that the two distance sleeves (24, 25) are provided with a thread (32, 35) for receiving the bolt (19), wherein the bolt (19) has a threaded section (21) remote from the head, which can be screwed in torque-transmitting relationship into the distance sleeve (24) close to the bolt head.

13. Motor vehicle body according to claim 12, characterised in that the threaded section (21) of the bolt (19) remote from the head is provided with a jamming coat.

14. Motor vehicle body according to any of claims 1 to 13, characterised in that at least one of the end plates (13) comprises a mounting flange (37) which is angularly connected thereto and on which the bores (15, 16) are provided.

15. Motor vehicle body according to claim 14, characterised in that the mounting flange (37) is oriented approximately in the transverse direction of the body (2).

16. Motor vehicle body according to any of claims 1 to 15, characterised in that the structural crossbeam (6) approximately in its central region is additionally connected to the body (2), preferably to a longitudinal tunnel (39), with a supporting element (38) which can be subjected to pressure and/or tension.

17. Motor vehicle body according to claim 16, characterised in that the supporting element (38) is mounted resiliently and pivotably at least on the structural crossbeam (6).

## Revendications

1. Carrosserie de véhicule automobile comportant une traverse structurelle (6) intégrée, la traverse structurelle servant d'élément de montage et de support central pour le cockpit du véhicule et étant vissée à la carrosserie, des deux côtés dans la région des montants A (7, 8) de la carrosserie, et des éléments de centrage (9, 10) orientés dans la direction longitudinale de la carrosserie assurant le positionnement de la traverse structurelle lors de son montage étant prévus, caractérisée par le fait qu'il est prévu deux éléments de centrage (9, 10) en forme de goujons, les éléments de centrage (9, 10) étant liés à la traverse structurelle (6) dans la région des deux extrémités de celle-ci, et la traverse structurelle (6) comportant à ses deux extrémités des plaques frontales (13, 14) orientées dans la direction longitudinale de la carrosserie (2) et chacune des plaques frontales (13, 14) étant pourvue de plusieurs trous (15, 16) destinés à recevoir des vis (19) liées à la carrosserie (2).

2. Carrosserie de véhicule automobile selon la revendication 1, caractérisée par le fait que l'élément de centrage (9, 10) concerné est conformé en cône dans la région de son extrémité libre.

3. Carrosserie de véhicule automobile selon la revendication 1 ou 2, caractérisée par le fait que la vis (19) concernée traverse un élément d'espacement (17) disposé entre la paroi (18) de carrosserie concernée et la plaque frontale (13, 14) de la traverse structurelle (6).

4. Carrosserie de véhicule automobile selon la revendication 3, caractérisée par le fait que l'élément d'espacement (17) est réglable dans la direction longitudinale de la vis de manière à faire varier sa longueur.

5. Carrosserie de véhicule automobile selon la revendication 4, caractérisée par le fait que l'élément d'espacement (17) comporte deux douilles d'espacement (24, 25) vissées l'une dans l'autre.

6. Carrosserie de véhicule automobile selon l'une des revendications 3 à 5, caractérisée par le fait que les vis (19) qui traversent l'élément d'espacement (17) sont vissées dans un écrou (23) qui est fixé à la plaque frontale (13, 14) de la traverse structurelle (6) ou à la paroi (18) de carrosserie.

7. Carrosserie de véhicule automobile selon l'une des revendications 3 à 5, caractérisée par le fait que la vis (19) qui traverse l'élément d'espacement (17) est vissée dans un trou taraudé (35) de l'élément d'espacement (17) fixé à la plaque frontale (13, 14) de la traverse structurelle (6) ou à la paroi (18) de carrosserie.

8. Carrosserie de véhicule automobile selon la revendication 6 ou 7, caractérisée par le fait que l'écrou (23) ou l'élément d'espacement (17) est soudé à la plaque frontale (13, 14) de la traverse structurelle (6).

9. Carrosserie de véhicule automobile selon l'une des revendications 5 à 8, caractérisée par le fait que la douille d'espacement (24) mobile en rotation présente une section transversale polygonale, notamment une section transversale en carré ou en hexagone régulier.

10. Carrosserie de véhicule automobile selon l'une des revendications 5 à 9, caractérisée par le fait que la douille d'espacement (25) éloignée de la tête (20) de vis est liée à une bague extérieure (26) pourvue d'ergots d'encliquetage (27), les ergots d'encliquetage (27) pouvant être introduits dans des trous (28) dans la plaque frontale (13, 14).

11. Carrosserie de véhicule automobile selon la revendications 10, caractérisée par le fait que la douille d'espacement (25) éloignée de la tête (20) de vis est en métal et que la bague extérieure (26) pourvue d'ergots d'encliquetage (27) est en matière plastique.

12. Carrosserie de véhicule automobile selon l'une des revendications 3 à 8, caractérisée par le fait que les deux douilles d'espacement (24, 25) sont pourvues d'un filetage (32, 35) destiné à recevoir la vis (19), la vis (19) comportant une partie de filetage (21) éloignée de la tête qui peut être vissée dans la douille d'espacement (24) proche de la tête de vis de manière à transmettre le couple.

13. Carrosserie de véhicule automobile selon la revendication 12, caractérisée par le fait que la partie de filetage (21) de la vis (19) éloignée de la tête est pourvue d'un revêtement bloquant.

14. Carrosserie de véhicule automobile selon l'une des revendications 1 à 13, caractérisée par le fait qu'au moins une des plaques frontales (13) comporte une bride de fixation (37) attenante qui forme un angle et dans laquelle sont prévus les trous (15, 16).

15. Carrosserie de véhicule automobile selon la revendication 14, caractérisée par le fait que la bride de fixation (37) est orientée sensiblement dans la direction transversale de la carrosserie (2).

16. Carrosserie de véhicule automobile selon l'une des revendications 1 à 15, caractérisée par le fait que la traverse structurelle (6), dans sa région sensiblement médiane, est liée en outre à la carrosserie (2), de préférence à un tunnel (39) longitudinal, à l'aide d'un élément d'appui (38) sollicité en compression et/ou en traction.

17. Carrosserie de véhicule automobile selon la revendication 16, caractérisée par le fait que l'élément d'appui (38) est monté de manière élastique et avec possibilité de pivotement sur la traverse structurelle (6).
